# EUROPÄISCHE PATENTSCHRIFT

(11) **EP 1 314 038 B1**
(45) Veröffentlichungstag und Bekanntmachung des Hinweises auf die Patenterteilung: **31.10.2007**
(21) Anmeldenummer: 01967307.8
(22) Anmeldetag: 31.08.2001
(51) Int. Cl.: G01N 33/569

(54) **VERFAHREN ZUR ANALYSE VON STUHLPROBEN FÜR DIAGNOSTISCHE ZWECKE**
METHOD FOR ANALYSING STOOL SPECIMENS FOR DIAGNOSTIC PURPOSES
PROCEDE POUR L'ANALYSE D'ECHANTILLONS DE SELLES A DES FINS DIAGNOSTIQUES

(30) Priorität: 01.09.2000 DE 10043161
(43) Veröffentlichungstag der Anmeldung: 28.05.2003
(73) Patentinhaber: Oxoid (Ely) Limited, Angel Drove Ely CB7 4ET (GB)
(72) Erfinder: LAKNER, Meret, 80689 München (DE); TRÜE, Andreas, 0084 Pretoria (ZA); DEHNERT, Sonja, 81373 München (DE); REITER, Christian, 85757 Karlsfeld (DE)
(74) Vertreter: Eisenführ, Speiser & Partner
(86) Internationale Anmeldenummer: PCT/EP2001/010067
(87) Internationale Veröffentlichungsnummer: WO 2002/018931

(56) Entgegenhaltungen:
- WO-A-94/10571
- WO-A-99/22239
- US-A- 4 372 888
- US-A- 5 198 365
- US-A- 5 552 294
- US-A- 5 932 430

## Beschreibung

Die vorliegende Erfindung betrifft ein Verfahren zur Analyse einer Stuhlprobe für diagnostische Zwecke.

Stuhlproben werden im Rahmen der Diagnostik routinemäßig auf die Anwesenheit von Bakterien, Viren, Parasiten und andere Organismen getestet Mit immunologischen Tests können beispielsweise Antigene der entsprechenden Organismen nachgewiesen werden. Derartige diagnostischen Nachweisverfahren umfassen hierbei die Stuhlprobennahme, gewöhnlich einige Schritte zur Aufbereitung der Stuhlprobe sowie das eigentliche immunologische Testverfahren, bei dem die An- oder Abwesenheit des zu detektierenden Agenzes, z.B. ein Antigen, anhand einer Reaktion, beispielsweise einer Farbreaktion, nachgewiesen wird.

Im Gegensatz zu invasiven Techniken wie beispielsweise Endoskopie und Biopsie, die für den Organismus in den meisten Fällen belastend und häufig auch mit hohem apparativen Aufwand sowie einem gesundheitlichen Risiko verbunden sind, stellen nicht-invasive Techniken, wie die Stuhlprobennahme und anschließende Analyse, einfache Möglichkeiten bereit, Organismen, die den Verdauungstrakt besiedeln, nachzuweisen.

Die Anwendung von immunologischen Testverfahren zur Analyse von Stuhlproben gestaltet sich jedoch aus mehreren Gründen schwierig: Der Umgang mit Stuhlproben ist unangenehm, die Aufbereitung der Stuhlproben aufwendig, komplex und zeitraubend. Um die Stuhlproben in einem immunologischen Testverfahren einsetzen zu können, müssen diese zuvor von für die Testverfahren störenden Verunreinigungen befreit werden. Üblicherweise umfaßt die Aufbereitung von Stuhlproben daher mehrere Schritte wie beispielsweise Verdünnung, Zentrifugation oder Filtration.

In der US 5,198,365 wird beispielsweise eine Methode zur Stuhlaufbereitung durch Probenverdünnung um den Faktor 10 bis 100 beschrieben. Eine derartige Probenverdünnung wirkt sich jedoch nachteilig auf die Sensitivität des Tests und die Inkuba6onszeiten bei der Testdurchführung aus. Von Vellacott et al. (Lancet 32 (1): 249 (1981)) wird ein immunologischer Test zur Detektion von okkultem Blut im Stuhl beschrieben, in dem ein Zentrifugationsschritt zur Probenaufbereitung nötig ist. Hasan et al. (J. Clin. Micro. 32,: 249 (1994)) beschreibt einen immunodiagnostischen Test zur Detektion von *Vibrio cholera* in klinischen Proben. In diesem Verfahren muß die Probe vorab über einen separaten Filter aufgereinigt werden.

Entsprechend sind im Stand der Technik Verfahren zur Diagnose z.B. von *Entamoeba histolytica* (Haque (1993), J. Infect. Dis. 167: 247-9), enterohämorrhagische *Escherichia* coli (EHEC; Park (1996), J. Clin. Microbiol. 34: 988-990), Torovirus-ähnliche Partikel (Koopmans (1993), J. Clin. Microbiol. 31: 2738-2744) oder, *Taenia saginata* (Machnicka (1996), Appl. Parasitol. 37:106-110) aus Stuhl beschrieben.

In der US 5,932,430 wird ein Verfahren zur Bestimmung von H. pylori in Stuhlproben unter Verwendung eines Probenpuffers mit nichtionischen Detergenzien (Tween 20, Triton X-100), PBS als Puffersubstanz und verschiedenen Blockierungsreagenzien (BSA, fötales Kälberserum) offenbart. Die US 5,552,294 wiederum offenbart ein Verfahren zur Bestimmung von mindestens einem Virulenz-assozüerten-Faktor (VAF) in Stuhlproben unter Verwendung einer VAFfreisetzenden Lösung, die oberflächenaktive Substanzen (CHAPS, Tween 20 etc.) enthält.

Diesen Verfahren ist gemeinsam, daß ein oder mehrere separate Verfahrensschritte zur Probenaufbereitung dem eigentlichen Test vorgeschaltet sind. Die Probenaufbereitung erfolgt in der Regel durch Suspension der Stuhlprobe in einem geeigneten Suspensionspuffer. Die Zusammensetzung dieses Puffers hat großen Einfluß auf die Sensitivität und Spezifität des Tests. Als besonders problematisch erweist sich häufig der Ausschluß der Detektion von falsch-positiven Proben. Die Detektion von falsch-positiven Proben hängt wesentlich von der Zusammensetzung der Probenpufferbestandteile ab. Zudem beeinflußt der Proteingehalt der Probe die Viskosität der Probensuspension und wirkt sich somit auf das Fließverhalten der Probensuspension aus.

Die Probenaufbereitung sollte auf folgende Gesichtspunkte hin optimiert sein: hohe Reproduzierbarkeit, hohe Sensitivität und hohe Spezifität sowie eine geringe Viskosität

Der vorliegenden Erfindung lag das technische Problem zugrunde, ein möglichst einfaches Verfahren zur Analyse von Stuhlproben für diagnostische Zwecke anzugeben. Das Verfahren sollte eine möglichst einfache Probenhandhabung bei gleichzeitig hoher Sensitivität, Spezifität und Reproduzierbarkeit der erhaltenen Ergebnisse gewährleisten.

Das Problem wird erfindungsgemäß gelöst durch ein Verfahren zur Analyse einer Stuhlprobe für gemäβ Anspruch 1.

Dabei wird die Puffersubstanz ausgewählt aus PBS, Glycinpuffer (0,1 M Glycin, 140 mM NaCl), HEPES ([4-(2-Hydroxyethyl)-piperazino]-ethansulfonsäure), MOPS (3-Morpholino-1-propansulfonsäure), wobei PBS besonders bevorzugt ist.

Der pH der Lösung liegt in einem Bereich von 7,0 bis 8,0, vorzugsweise 7,2 bis 7,7, wobei optimale Ergebnisse bei dem Nachweis von *H. pylori* bei einem pH von 7,3 bis 7,5 erhalten werden.

Dabei ist das Detergenz das zwitterionische Detergenz Chaps (3-[(3-Chloramidopropyl)-di-methylammonium]-1-propansulfonat)

Für den Aufschluß des Probenmaterials sind Detergenzien unabdingbar. Diese legen im Falle eines immunologischen Nachweises antigene Strukturen (Epitope) frei, um so eine Bindung der eingesetzten Antikörper an das nachzuweisende Antigen zu ermöglichen. Üblicherweise werden nicht-ionische Detergenzien wie Triton®, Tween® usw. verwendet Es hat sich im Rahmen der vorliegenden Erfindung jedoch überraschenderweise gezeigt, dass die Verwendung des zwitterionischen Detergenzes wesentliche Vorteile hat gegenüber der Verwendung nicht-ionischer Detergenzien, indem unter anderem die Detektion falsch-positiver Proben bei Verwendung des zwitterionischen Detergenzes erheblich vermindert wird. Das Detergenz/Chaps/bietet gegenüber weiteren Detergenzien, wie beispielsweise Triton^{®} oder Tween^{®,} weitere Vorteile: Chaps weist gegenüber diesen Detergenzien weniger denaturierende Eigenschaften auf (Hjelmeland; US 4,372,888). Die Oberflächenproteine bleiben somit beim Aufschluß (bei der Probenaufbereitung) im Wesentlichen als intakte Komplexe in der Membran erhalten. Die Oberflächenproteine werden in geringerem Maße fragmentiert und denaturiert. Die Wahrscheinlichkeit, beim Aufschluß antigene Epitope zu erhalten, die für einen immunologischen Nachweis ausreichend sind, wird daher erhöht Speziell bei dem immunologischen Nachweis in Probenmaterial, das den Verdauungstrakt passiert hat, kann durch die enzymatische Degradation des Antigens bereits ein hoher Grad an Fragmentierung des Probenmaterials vorliegen. Der möglichst effiziente Erhalt der verbliebenen Restepitope ist daher äußerst wünschenswert.

Dabei liegt das Detergenz in einer Konzentration von 0,01 bis 1,5% (v/v), vorzugsweise in einer Konzentration von 0,05 bis 0,3% (v/v) und ganz besonders bevorzugt in einer Konzentration von 0,1 bis 0,15% (v/v) vor.

Das in der verwendeten Lösung enthaltene Blockierungsreagenz ist Mäuseserum. Mäuseserum ist insbesondere dann vorteilhaft, wenn ein immunoassay durchgeführt wird, bei dem Mäuseantikörper zum Nachweis eines Antigens eingesetzt werden. Die Verwendung von Serum gleicher Spezies wie die zur Detektion verwendeten Antikörper (Mäuseserum in Kombination mit Maus-Antikörpern) hat sich als besonders vorteilhaft zum Blockieren von unspezifischen Bindungen erwiesen, da die potentiellen unspezifischen Bindungen durch Serum der gleichen Spezies nahezu vollständig abgesättigt/blockiert werden können. Die höhere Absättigung der unspezifischen Bindungen steigert wiederum die Sensitivität/Spezifität des Nachweises.

Dabei liegt das Blockierungsreagenz in einer Konzentration von 0,05 bis 5%, vorzugsweise in einem Bereich von 0,1 bis 1%, ganz besonders bevorzugt in einem Bereich von 0,4 bis 0,6% in der Lösung vor. Die prozentualen Konzentrationsangaben sind als "% (v/v)" für das flüssige Blockierungs-reagenz Mäuseserum zu verstehen.

Herkömmliche Lösungen zur Probenaufbereitung weisen oft einen sehr hohen Gehalt an Serum auf. Oft werden Konzentrationen von bis zu 50% Serum eingesetzt. Der hohe Serumgehalt bewirkt jedoch eine hohe Viskosität der aufbereiteten Probe und erschwert dadurch ihre Handhabung. Dieses Problem tritt bei der verwendeten Lösung nicht auf: Der Gehalt an Serum in der Lösung ist niedriger als bei den herkömmlichen Lösungen zur Probenaufbereitung. Dadurch wird die Viskosität der aufbereiteten Probe geringer, was besonders vorteilhaft bei der Handhabung in der Probenvorbereitung ist Das Fließverhalten wird deutlich verbessert, wodurch sich der Probenpuffer besonders zum Einsatz in ELISA oder immunchromatographischen Tests (Teststreifen) eignet. Speziell bei Anwendungen auf einem Teststreifen führt eine niedrige Viskosität zu einem verbesserten Laufverhalten und ermöglicht einen höheren Durchsatz an Probe pro Zeiteinheit. Durch die Verwendung von Serum der gleichen Spezies wie die Detektionsantikörper, Mäuseserum in Kombination mit Maus-Antikörpem, kann zudem der Gehalt an Serum im Konjugatpuffer verringert werden.

Bei einer bevorzugten Ausführungsform enthält die im erfindungsgemäβen Verfahren verwendete Lösung weitere Additive wie Probenstabilisierungsmittel. Diese Mittel dienen im Wesentlichen dazu, dass die Probe auch nach längerer Lagerung noch für die Durchführung der immunologischen Nachweisreaktionen geeignet ist und keine verfälschten Ergebnisse liefert Zu diesen Stabilisierungsmittel zählen unter anderem Phenol und Antibiotika, wie beispielsweise Gentamicinsulfat und Proclin^{®} 300.

Die verwendete Lösung ist weiterhin besonders vorteilhaft, da sie als Basispuffer sowohl für das Konjugat (markierter Detektionsantikörper) als auch für die Positiv- und Negativkontrolle verwendet werden kann, wodurch eine deutliche Vereinfachung des Testverfahrens ermöglicht wird.

Bei einer weiteren bevorzugten Ausführungsform enthält die im erfindungsgemäβen Verfahren verwendete Lösung zusätzlich einen Komplexbildner für Metallionen, vorzugsweise EDTA oder EGTA. Besonders bevorzugt ist EDTA. Vorzugsweise liegt der Komplexbildner in einer Konzentration von 1 mM in der Lösung vor.

Bei dem erfindungsgemäßen Verfahren zur Analyse einer Stuhlprobe für die Diagnose einer H. pylori Infektion wird die Probe mit der Lösung in Kontakt gebracht. Dabei wird die Probe in der Regel in der Lösung suspendiert Nach möglichst homogener Verteilung der Probe in der Lösung wird diese einem Immunoassay unterzogen und nach erfolgtem Immunoassay wird das erzeugte Meßsignal abgenommen. Vor dem Immunoassay können die partikulären Probenbestandteile durch Zentrifugation oder Filtration entfernt werden.

Bei einer bevorzugten Ausführungsform wird der Immunoassay als ELISA durchgeführt. Dabei wird die suspendierte Probe in ein Behältnis eingebracht, weiches die Antigen-spezifischen Reagenzien enthält. Vorzugsweise wird im Rahmen dieses ELISA ein Sandwich-Komplex aus nachzuweisendem Antigen und Antigen-spezifischen Antikörpern aufgebaut. Bei einer alternativen Ausführungsform wird die suspendierte Probe auf einen Filterstreifen aufgebracht, der die entsprechenden Nachweisreagenzien bereits an vorab bestimmten Zonen enthält Das Durchführen des Immunoassays auf einem Filter hat den Vorteil, dass unerwünschte partikuläre Probenbestandteile von dem Antigen von Interesse vor dessen Nachweis abgetrennt werden. Zur besseren Abtrennung kann zusätzlich ein Filter vorgeschaltet werden.

Die folgenden Beispiele erläutern die Erfindung.

### Beispiele

### Vergleich verschiedener Lösungen zur Probenaufbereitung in einem Einschritt-ELISA

Für den Test standen Stuhlproben von Patienten aus zehn verschiedenen Kliniken oder gasteroenterologischen Praxen zur Verfügung, die als *H. pylori* negativ (G0) oder *H*. *pylori* positiv (G4) mittels ¹³C-Urea-Atemtest und/oder histologischer Untersuchungen von Magenbiopsien diagnostiziert worden waren.

### H. pylori-Stuhl-Sandwich-ELISA (Einschritt-Test)

Die Beschichtung der ELISA-Platte (MaxiSorb Lock well; Nunc) erfolgte über Nacht bei 2-8°C mit 100 µl einer mAK-Lösung (2,0 µg HP25,2m/2H10 (Connex, Martinsried) pro ml Carbonatpuffer, 0,1 M, pH 9,5). Die so beschichteten ELISA-Platten wurden 2x mit PBS gewaschen. Zum Blockieren der freien Bindungsstellen wurden 200 µl Blockierungspuffer (0,3% (w/v) BSA; 20% (w/v) Sorbitol in PBS) je Vertiefung zugegeben und bei 2-8°C über Nacht inkubiert. Die abgesättigten Platten wurden abgesaugt, über Nacht bei 28°C im Umluft-Trockenschrank getrocknet und anschließend bei 2-8°C gelagert

Patientenstuhl wurde 1:5 (0,1 g Stuhlprobe + 500 µl Probenpuffer) in der im erfindungsgemäßen Verfahren verwendeten Lösung (75 mM PBS + 0,5% Mäuseserum + 1 mM EDTA + 0,05% Proclin^{®} 300 + 50 µg/ml Gentamicinsulfat +10 mM Phenol + 0,1% (v/v) Chaps) ca. 30 sec suspendiert (Vortex) und anschließend 5 min bei 5000 g abzentrifugiert. Pro Vertiefung wurden 50 µl des Überstands (Doppel- bis Dreifachbestimmung) auf die Platte aufgetragen.

Anschließend wurden 50 µl des in Probenpuffer verdünnten POD-markierten Antikörpers HP25,2m/2H10-POD (Connex, Martinsried) direkt in die Stuhlsuspension gegeben. Die Platten wurden 1 Stunde bei Raumtemperatur auf dem Schüttler (Stufe 4-5) inkubiert.

Nach viermaligen Waschen mit Waschpuffer (75 mM PBS, 0,25% (v/v) Tween^{®}) wurde das Peroxidase-Substrat TMB (Einkomponentensubstrat von Neogen) zugegeben (100 µl/Vertiefung). Nach 10 Minuten wurde die Enzymreaktion durch Zugabe von 1 N Salzsäure (100 µl/Vertiefung) gestoppt. Die anschließende Messung der Farbintensität erfolgte bei 450 nm gegen die Referenzwellenlänge 630 nm.

### Beispiel 1: Vergleich des Signal-/Hintergrundverhältnisses verschiedener Lösungen zur Probenaufbereitung

**Tabelle 1** zeigt den Vergleich verschiedener Lösungen anhand von ausgewählten Proben, die sich in der Detektion als besonders schwierig erwiesen.

| | | | | |
|---|---|---|---|---|
| Fang-Antikörper | HP25,2m/2H10 (2,0 µg/ml) | | | |
| Detektions-Antikörper | HP25,2m/2H10-POD (200 ng/ml) | | | |

| Probenpuffer | | r-biopharm Probenpuffer | Im erfindungsgemäβen Verfahren verwendete Lösung | PBS + Magermilchpulver (2% (w/v)) |
|---|---|---|---|---|
| | Probe | OD | OD | OD |
| CX1002 | G0 | 2.026 | 0.534 | 0.678 |
| CX2028 | G0 | 0.059 | 0.034 | 0.090 |
| CXT0069-1 | G0 | 0.079 | 0.021 | 0.032 |
| CXT0071-1 | G0 | 0.348 | 0.030 | 0.051 |
| CXT0072-1 | G0 | 0.079 | 0.036 | 0.052 |
| CXT0073-1 | G0 | 0.044 | 0.036 | 0.076 |
| CXT0074-1 | G0 | 0.125 | 0.028 | 0.058 |
| CX1038 | G4 | 0.100 | 0.040 | 0.074 |
| CXT0053-1 | G4 | 4.458 | 4.247 | 4.285 |
| CXT0058-1 | G4 | 0.221 | 0.146 | 0.192 |
| CXT0077-1 | G4 | 0.264 | 0.180 | 0.198 |
| Summe G4 | | 5.607 | 4.714 | 4.831 |
| Summe G0 | | 2.760 | 0.719 | 1.037 |
| Ag-NWG in ng/ml | | 0.33 | 0.33 | 0.11 |
| Hintergrund | | 0.102 | 0.08 | 0.035 |

| | | | | |
|---|---|---|---|---|
| r-biophann-Lösung erhätlich von der Firma r-biopharm, Darmstadt OD: Optische Dichte NWG: Nachweisgrenze | | | | |

**Ergebnis:** 75 mM PBS + 0,5% Mäuseserum + 1 mM EDTA + 0,05% (w/v) Proclin^{®} 300 + 30 µg/ml Gentamicinsulfat + 0,1 % (v/v) Chaps zeigt von den 3 untersuchten Puffern das beste Signal/Hintergrund-Verhältnis.

### Beispiel 2: Einfluß verschiedener Chaps-Konzentrationen in der im erfindungsgemäßen Verfahren verwendeten Lösung auf das Signal-/Hintergrundverhältnis und die Sensitivität des Tests

| | | | | |
|---|---|---|---|---|
| Fang-Antikörper | HP25,2m/2H101,5 µg/ml | | | |
| Detektions-Antikörper | HP25,2m/2H10- POD 0,2 µg/ml | | | |

| | 0% Chaps | 0, 1 % (v/v) Chaps | 0,25% (v/v) Chaps | 0,5% (v/v) Chaps |
|---|---|---|---|---|
| Antigennachweis [ng/ml] | 0,3 | 0,3-1 | 0,3 | 0,1-0,3 |
| Hintergrund HO delta OD | 0,15 | 0,067 | 0,04 | 0,026 |
| delta OD bei 9 ng/ml <60 kDa | 0,759 | 0,89 | 0,787 | 1,267 |
| Patientenproben | | | | |
| CXT73 G0 | 0,12 | 0,03 | 0,04 | 0,06 |
| CXT 54 G0 | 0,11 | 0,03 | 0,04 | 0,05 |
| CX 60 G0 | 0,12 | 0,065 | 0,04 | 0,05 |
| CXT 63 G0 | 0,07 | 0,05 | 0,045 | 0,05 |
| CXT 62 G0 | 0,03 | 0,07 | 0,03 | 0,03 |
| CXT 64 G4 | 0,51 | 0,94 | 0,9 | 0,5 |
| CXT 58-3 G4 | 0,2 | 0,38 | 0,27 | 0,21 |

**Ergebnis:** Die Tabelle zeigt, daß die Zugabe von Chaps (0,1-0,25% (v/v)) ein positives G0/G4-Signalverhältnis erzeugt

## Patentansprüche

1. Verfahren zur Analyse einer Stuhlprobe für die Diagnose einer H. pylori Infektion, umfassend die Schritte:
a) Inkontaktbringen der Probe mit einer Lösung, die einen pH in einem Bereich von 7,0 bis 8,0 aufweist, enthaltend
mindestens eine Puffersubstanz ausgewählt aus PBS, Glycinpuffer (0,1 M Glycin, 140 mM NaCl), HEPES ([4-(2-Hydroxyethyl)-piperazino]-ethansulfonsäure) und MOPS (3-Morpholino-1-propansulfonsäure);
das zwitterionische Detergenz Chaps (3-[(3- Cholamidopropyl)-dimethylammonium]-1-propansulfonat) in einer Konzentration von 0,01 bis 1,5% (v/v), vorzugsweise in einem Bereich von 0,05 bis 0,3% (v/v), ganz besonders bevorzugt in einem Bereich von 0,1 bis 0,15% (v/v), und
das Blockierungsreagenz Mäuseserum in einer Konzentration von 0,05 bis 5%, vorzugsweise in einem Bereich von 0,1 bis 1%, ganz besonders bevorzugt von 0,4 bis 0,6%,
gegebenenfalls als Stabilisierungsmittel Gentamicinsulfat und/oder ProclinⓇ 300,
und gegebenenfalls einen Komplexbildner, vorzugsweise ausgewählt aus EDTA und EGTA, besonders bevorzugt EDTA, vorzugsweise in einer Konzentration von 1 mM:
b) Durchführen eines Immunoassays mit der nach Schritt a) behandelten Probe, und
c) Abnehmen eines Meßsignals, das im Rahmen des Immunoassays erhalten wurde.

2. Verfahren nach Anspruch 1, **dadurch gekennzeichnet, dass** der Immunoassay ein ELISA ist.

3. Verfahren nach Anspruch 1 oder 2, **dadurch gekennzeichnet, dass** die mit der Lösung behandelte Stuhlprobe auf einen Filterstreifen aufgebracht wird.

## Claims

1. Process for the analysis of a stool sample for the diagnosis of an *H. pylori* infection comprising the following steps:
a) bringing the sample into contact with a solution that has a pH in a range from 7.0 to 8.0 containing:
at least one buffer substance selected from PBS, glycine buffer (0.1 M glycine, 140 mM NaCl), HEPES ([4-(2-hydroxyethyl)piperazino]ethanesulfonic acid) and MOPS (3-morpholino-1-propanesulfonic acid);
the zwitterionic detergent Chaps (3-[(3-cholamido-propyl)dimethylammonium]-1-propanesulfonate) in a concentration of 0.01 to 1.5% (v/v), preferably in a range from 0.05 to 0.3% (v/v), very particularly preferably in a range from 0.1 to 0.15% (v/v); and
the blocking reagent mouse serum in a concentration of 0.05 to 5%, preferably in a range from 0.1 to 1%, very particularly preferably from 0.4 to 0.6%;
if necessary, gentamicin sulfate and/or Proclin ® 300 as the stabilizer;
and if necessary a complexing agent, preferably selected from EDTA and EGTA, particularly preferably EDTA, preferably in a concentration of 1 mM;
b) carrying out an immunoassay with the sample treated according to step a); and
c) taking of a measurement signal that was obtained within the scope of the immunoassay.

2. Process according to claim 1, **characterized in that** the immunoassay is an ELISA.

3. Process according to claim 1 or 2, **characterized in that** the stool sample treated with the solution is applied to a filter strip.

## Revendications

1. Procédé pour l'analyse d'un échantillon de selles pour le diagnostic d'une infection à *H. pylori,* comprenant les étapes suivantes :
a) mise de l'échantillon en contact avec une solution ayant un pH dans un intervalle de 7,0 à 8,0, qui contient
au moins une substance tampon choisie parmi la PBS (solution de chlorure de sodium tamponnée au phosphate), un tampon glycine (glycine 0,1 M, NaCl 140 mM), HEPES (acide [4-(2-hydroxyéthyl)-pipérazino]-éthane-sulfonique) et MOPS (acide 3-morpholino-1-propanesulfonique) ;
le détergent zwitterionique Chaps (1-propane-sulfonate de 3-[(3-cholamidopropyl)-diméthylammonium]) à une concentration de 0,01 à 1,5 % (v/v), de préférence dans une plage de 0,05 à 0,3 % (v/v), de façon tout particulièrement préférée dans une plage de 0,1 à 0,15 % (v/v), et
le réactif de blocage sérum murin à une concentration de 0,05 à 5 %, de préférence dans une plage de 0,1 à 1 %, de façon tout particulièrement préférée de 0,4 à 0,6 %,
éventuellement, comme agent de stabilisation, du sulfate de gentamicine et/ou de la Proclin® 300,
et éventuellement un complexant, de préférence choisi parmi l'EDTA et l'EGTA, de façon particulièrement préférée l'EDTA, de préférence à une concentration de 1 mM ;
b) exécution d'un dosage immunologique avec l'échantillon traité selon l'étape a), et
c) captage d'un signal de mesure qui a été obtenu dans le cadre du dosage immunologique.

2. Procédé selon la revendication 1, **caractérisé en ce que** le dosage immunologique est un dosage ELISA.

3. Procédé selon la revendication 1 ou 2, **caractérisé en ce que** l'échantillon de selles traité par la solution est déposé sur une bande de filtre.
